# EUROPÄISCHE PATENTSCHRIFT

(11) **EP 2 168 416 B1**
(45) Veröffentlichungstag und Bekanntmachung des Hinweises auf die Patenterteilung: **06.11.2013**
(21) Anmeldenummer: 09170544.2
(22) Anmeldetag: 17.09.2009
(51) Int. Cl.: A01C 7/04

(54) **Einzelkorndosiervorrichtung**
Single grain metering device
Dispositif de dosage monograin

(30) Priorität: 26.09.2008 DE 102008037397
(43) Veröffentlichungstag der Anmeldung: 31.03.2010
(73) Patentinhaber: Horsch Maschinen GmbH, 92421 Schwandorf (DE)
(72) Erfinder: Horsch, Thomas, 74321, Bietigheim-Bissingen (DE)
(74) Vertreter: Benninger, Johannes

(56) Entgegenhaltungen:
- EP-A1- 0 536 543
- DE-A1- 3 103 101
- GB-A- 2 110 911
- US-A- 4 029 235
- US-A- 5 058 766

## Beschreibung

Die vorliegenden Erfindung betrifft eine Einzelkorndosiervorrichtung mit den Merkmalen des Oberbegriffs des Anspruchs 1.

Einzelkorndosiervorrichtungen dienen insbesondere zum Ausbringen von Saatgut und zum lagegenauen Einbringen der zuvor mechanisch vereinzelten Saatkörner in vorgegebenen Abständen innerhalb von Reihen auf dem Acker. Einzelkorndosiervorrichtungen sollen aus einem Samenvorrat sicher und schonend Einzelsamen abteilen und in möglichst genauem Zeit- oder Längenabstand aus dem Vereinzelungsgerät herausgeben.

Die Vereinzelung kann bspw. auf mechanischem Weg mittels sog. Zellenräder und/oder mittels pneumatischer Unterstützung oder auf vielfältige andere Weise erfolgen. Alle derzeit verwendeten Einzelkorndosiervorrichtungen beruhen darauf, dass einzelne Samenkörner aus einem Samenvorrat abgetrennt und in einem gleichmäßigen Abstand, fahrtgeschwindigkeitsabhängig, auf den Boden abgegeben werden. Die Samenvereinzelung erfolgt über eine Aufnahme einzelner Samen in entsprechend große Öffnungen (Zellen) beim Durchgang durch den Samenvorrat und anschließende Austragung. Die Öffnungen sind Bohrungen oder Nuten, die auf einem Zellenträger regelmäßig angeordnet sind. Bei mechanischen Geräten werden die Samen in die Zellen durch Schwerkraft zum Teil mit bzw. gegen die Fliehkraftunterstützung eingeführt. Bei pneumatischen Geräten bewirken Druckunterschiede die Vereinzelung. Zellenträger können sein: Zellenräder Lochbänder oder ähnliches. Der Auswurf aus der Zelle erfolgt frei durch Schwerkraft und/oder Fliehkraft, z.T. unterstützt durch Abstreifer.

Die meisten scheibengefürten pneumatischen Zellensysteme haben die Eigenheit, dass der Samen bei der Abgabe eine kurze Bewegung senkrecht zu einer Hauptbewegungsrichtung ausführt, um sich von der Zelle zu lösen, was Abgabeungenauigkeiten in Richtung und Zeitabständen verursachen kann. Samenkörner werden aus einer rotatorischen Bewegung heraus aus einer Zelle abgelöst und freigegeben was wiederum leichte Ungenauigkeiten in der tangentialen Ablöserichtung hervorruft, besonders bei kleineren Lochscheiben. Bei mechanisch arbeitenden Systemen sind die Zelllöcher im Vergleich zum einzelnen Kornsamen relativ groß, bei pneumatischen Systemen sind die Zellenlöcher kleiner als der Korndurchmesser meist auch als Loch ausgebildet. Es gibt auch Dosiergeräte mit Führungsschlitze (vgl. DE 3103101), wobei sich die Zellen jedoch nicht in den freien Raum öffnen.

Aufgrund der immer schnelleren Fahrtgeschwindigkeiten steigen damit auch der erforderliche Samendurchsatz und die Genauigkeit der Samenkornabgabe. Um dies zu erreichen, muss die Kornaufnahme und -vereinzelung in den Vereinzelungsaggregaten beschleunigt und deren Durchsatz vergrößert werden. Dieses Problem kann bspw. durch eine schnellere Kornaufnahme über einen möglichst großen Luftstrom bzw. großen Luftstromquerschnitt und dabei gleichmäßiger Kornabgabe gelöst werden.

Die DE 31 03 101 A1 offenbart eine Einzelkornsämaschine mit einer die Rückwand eines Saatgutbehälters bildenden, an ein Sauggebläse angeschossene, antreibbaren Säscheibe, die Ansaugöffnungen für die Saatkörner aufweist und die angesaugten Saatkörner entlang einer vom Bodenbereich des Behälters nach oben aus dem Saatgutbereich führenden Bahn durch eine Behälteröffnung aus dem Saatgutbehälter austrägt. Die Säscheibe ist durch zwei Teile gebildet, nämlich durch einen an das Sauggebläse angeschossene Scheibenkörper und durch einen, den Scheibenkörper gegenüber dem Saatgut abdeckenden, am Scheibenkörper anliegenden Scheibenblatt. Einer dieser Teile steht fest und bildet einen entlang der Austragsbahn verlaufenden Führungsschlitz. Der andere, drehbar gelagerte Teil weist über den Umfang verteilt Mitnehmerschlitze auf, die sich jeweils über den radialen Ausdehnungsbereich des Führungsschlitzes erstrecken.

Eine weitere Vorrichtung zum Vereinzeln von Saatgut geht aus der DE 34 00 121 A1 hervor. Die Vorrichtung weist ein in einem Gehäuse drehbar gelagertes Zellenrad auf, das mit trichterförmigen Bohrungen zur Aufnahme des Saatguts versehen ist, und das durch einen aus einer Düse austretenden Luftstrom hindurchgeführt ist. Das Zellenrad ist auf seinem Umfang mit einem Ring versehen, der annähernd bündig mit dem Zellenrad abschließt und bis zur Hälfte in die Trichter des Zellenrads hineinragt. Der Ring ist im Bereich der Trichter mit Bohrungen versehen, deren Durchmesser kleiner ist als das kleinste Korn.

Aus der DE 410 440 B ist eine Sämaschine mit Zellenrädern zur Einzelkornlegung bekannt. Die Zellen des Zellenrads sind durch Auswerfernuten miteinander verbunden, so dass die Körner in gleichen Abständen aus ein oder mehr Zellenreihen durch die Auswerfer im freien Fall in die Furche gebracht werden. Zwischen den Zellenreihen sind wellenförmige Scheidewände angeordnet, die für eine permanente Bewegung des Saatguts sorgen sollen.

Weitere Dosier- und Vereinzelungsvorrichtungen für Sämaschinen sind bspw. aus der US 3 888 387 A, aus der US 6 176 393 B1 sowie aus der US 6 634 522 B2 bekannt.

Das Anwendungsgebiet derartiger Einzelkorndosiervorrichtungen ist in der Regel die landwirtschaftliche Sämaschine zum Bestellen der Äcker und zum gleichmäßigen Ausbringen von Saatgut.

Als Ziel der vorliegenden Erfindung kann es angesehen werden, eine Einzelkorndosiervorrichtung zu schaffen, die einerseits einen möglichst hohen Durchsatz ermöglicht. Andererseits soll jedoch auch bei hohem Korndurchsatz eine gleichmäßig präzise und störungsfreie Kornvereinzelung und Kornabgabe, auch bei höherer Fahrgeschwindigkeit zu gewährleisten sein. Weiterhin sollen Samen mit weitgehend regelmäßigen Formen wie insbesondere Mais oder Sonnenblumen eine genaue Vereinzelung in hoher Frequenz, in den zeitlich gewünschten Abständen (bei Feldarbeiten der Fahrtgeschwindigkeit angepasst) in eine möglichst genaue Abgabequalität Zeitlich und Örtlich zu erreichen.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Die Erfindung umfasst eine Einzelkorndosiervorrichtung mit einem Gehäuse, einer in das Gehäuse mündenden Kornzuführung und wenigstens einem innerhalb bzw. im Bereich eines Kornsammelraums rotierenden Förderelement. Dieses Förderelement ist als dünne rotierende Förderscheibe ausgebildet, die auf ihrer Seitenfläche oder Mantelfläche eine Vielzahl von regelmäßig voneinander beabstandeten, jeweils mit Unterdruck beaufschlagbaren Öffnungen zur Kornaufnahme, -vereinzelung und Förderung in Umfangsrichtung der Förderscheibe zu einem Abgabebereich aufweist. Die Öffnungen weisen in einem Aufnahme-, Vereinzelungs- und Förderbereich innerhalb des Gehäuses einen geschlossenen Umfang auf. Die Öffnungen erstrecken sich über die gesamte Dicke des Förderelements bzw. der Förderscheibe und sind zumindest temporär von Luft durchströmt, was für eine zuverlässige Anhaftung der Körner am Förderelement während dessen Drehbewegung sorgt. Der Öffnungsquerschnitt der Öffnungen des rotierenden Förderelements öffnet sich im Abgabebereich in radialer Richtung, wodurch die vereinzelte Kornabgabe aus dem Gehäuse der Einzelkorndosiervorrichtung unmittelbar in eine Saatleitung und/oder in einen Förderstrom zur Weiterleitung der vereinzelten Saatkörner zu den Saatleitungen bzw. den Fallrohren der Säscharen münden.

Das Förderelement ist durch eine rotierende Förderscheibe mit einer Vielzahl von darin angeordneten luftdurchströmten Öffnungen gebildet. Die Öffnungen sind hierbei jeweils auf einem Kreisring an einer Seitenfläche der Förderscheibe angeordnet. Über den Verlauf des Aufnahme-, Vereinzelungs- und Förderbereichs sind die Öffnungen geschlossen bzw. haben einen umfänglich geschlossenen Querschnitt, was für eine einwandfreie Mitnahme und Förderung der Körner notwendig ist. Die Kornabgabe in die Saatleitungen erfolgt vorzugsweise in annähernd tangentialer Richtung, bezogen auf die Drehachse des Förderelements bzw. der Förderscheibe. Um dies zu erreichen, öffnen sich die Öffnungen im Abgabebereich in radialer Richtung. Zudem ist es vorteilhaft, wenn ein Öffnungsquerschnitt der Öffnungen eine Größe im Verhältnis zu den zu vereinzelnden und/oder zu dosierenden Saatkörnern aufweist, welche die zu dosierenden Körner in die Öffnungen teilweise eintauchen lässt. Dem Förderelement bzw. der Förderscheibe ist eine äußere Führungskante einer Führungsscheibe zugeordnet, wobei die Förderscheibe die äußere Führungskante im Umfang überragt. Zudem ist das Förderelement bzw. die Förderscheibe vor der äußeren Führungskante, auf einer den Körnern zugewandten Seite angeordnet, so dass die Öffnungen zur Aufnahme und zum Festhalten der Körner durch die Förderscheibe und die äußere Führungskante definiert sind. Weiterhin kann eine Ausführungsvariante der erfindungsgemäßen Einzelkorndosiervorrichtung einen Kornabstreifer im Abgabebereich aufweisen, der eine annähernd lineare Kornbewegung im Abgabebereich definiert. Die Öffnungen erweitern und öffnen sich im Abgabebereich in radialer Richtung, so dass die Kornabgabe in die gewünschte Richtung gewährleistet ist.

Wahlweise kann die dem jeweiligen Korn vorauseilende Kante im Bereich des Außenumfangs der Förderscheibe abgerundet, abgeschnitten oder abgeschrägt sein, was verhindert, dass das Korn beim Ablösen von der Förderscheibe noch in ungewollter Weise von der vorauseilenden Kante in Umdrehungsrichtung beeinflusst werden kann.

Der Abgabebereich der Führungsscheibe verläuft vorzugsweise nach unten und bildet dabei ein Abstreifelement für die von der rotierenden Förderscheibe abzutrennenden Körner. Die Kornabgabe nach unten ist dabei unter Vermeidung einer Kollision mit Wandabschnitten vorgebbar.

Eine weitere Ausführungsvariante der erfindungsgemäßen Einzelkorndosiervorrichtung sieht vor, dass im Abgabebereich die Druckdifferenz an den Öffnungen der rotierenden Förderscheibe abgeschnitten ist. Die Förderschlitze der Förderscheibe erstrecken sich jeweils sternförmig nach außen und können zudem jeweils einen gegen die Rotationsrichtung der Förderscheibe gekrümmten Verlauf aufweisen.

Die Öffnungen für den Korntransport sind im Aufnahmebereich teilweise von drei Seiten her durch die Förderscheibe und einseitig nach außen durch die Führungsscheibe bzw. durch das Vereinzelungselement begrenzt. Sie gehen dann über in einen Bereich, in dem die Öffnungen an zwei Seiten durch die Förderscheibe und eine bis zwei Seiten durch die Führungsscheibe begrenzt sind.

Wahlweise kann die Einzelkorndosiervorrichtung zumindest in Teilbereichen unter den durch die Förderscheibe und der Führungskante gebildeten Öffnungen eine Tiefenbegrenzung aufweisen, die parallel und beabstandet zu den Öffnungen zur Definition der Eintauchtiefe der jeweiligen Körner verläuft. Diese Tiefenbegrenzung kann dazu beitragen, dass unterschiedliche Körnerformen und/oder -größen gleichermaßen gut gefördert werden können. Andererseits wird dadurch verhindert, dass kleineren Körner durch die Öffnungen in Richtung des Ansaugbereichs der Luft rutschen können. Den Öffnungen ist dabei vorzugsweise parallel oder abschnittsweise parallel und beabstandet zum Förderelement eine Tiefenbegrenzung zur Definition der Eintauchtiefe der jeweiligen Körner zugeordnet. Bei dieser Variante ist das Förderelement bzw. die Förderscheibe zwischen zwei Funktionselementen rotierend angeordnet, die durch die Tiefenbegrenzung und eine innere Führungskante gebildet sind.

Der Öffnungsquerschnitt der Öffnungen kann wahlweise während eines Umlaufs der Förderscheibe variieren. Zudem kann im Abgabebereich die Druckdifferenz an den Öffnungen der rotierenden Förderscheibe abgeschnitten sein, wobei die Druckdifferenzbarriere an den Öffnungen dem Kornabgabebereich vorgeschaltet ist.

Somit sind die luftdurchströmten Öffnungen durch mindestens zwei Funktionselemente begrenzt bzw. definiert. Diese mindestens zwei Funktionselemente können derart überlappend angeordnet sein, dass im Abgabebereich eine annähernd lineare Kornbewegung vorgebbar ist. Weiterhin kann vorgesehen sein, dass mindestens eines der begrenzenden Funktionselemente als Kornabstreifer im Abgabebereich fungiert. Das Förderelement bzw. die Förderscheibe ist hierbei rotierend zwischen den zwei Funktionselementen angeordnet. So kann die Förderscheibe zwischen der teilweisen Tiefenbegrenzung und einer äußeren oder inneren Führungskante angeordnet sein, wobei die Förderscheibe die äußere Führungskante im Umfang überragt. In diesem Fall liegen die Körner in den Öffnungen, tauchen in diese teilweise ein und werden in ihrer Lage zusätzlich durch die feststehende äußere Führungskante sowie die beabstandet zur Führungsscheibe und parallel zu dieser angeordneten teilweisen Tiefenbegrenzung geführt und in ihrer Position gehalten, bis sie den Abgabebereich erreichen.

In weiterer Ausgestaltung kann vorgesehen sein, dass die in der Förderscheibe angeordneten luftdurchströmten Öffnungen durch mindestens drei Funktionselemente begrenzt bzw. definiert sind, die durch die Tiefenbegrenzung, wenigstens eine Führungskante sowie das Förderelement gebildet sind. Zudem ist das Förderelement bei der Abgabe zwischen der teilweisen Tiefenbegrenzung und wenigstens einer der Führungskanten beweglich angeordnet.

Grundsätzlich kann es sich, wie bereits oben erwähnt, bei dem Förderelement wahlweise um eine Scheibe (plan oder in konvexer oder konkaver Richtung gewölbt) oder um eine Trommel handeln, die um die Tiefenbegrenzung für die Körner herum rotieren kann, so dass dabei die Körner in Richtung zum Abgabebereich gefördert und dort abgegeben werden, wobei sie eine annähernd lineare Bewegungsrichtung erhalten können.

Ein Öffnungsquerschnitt der Öffnungen der rotierenden Förderscheibe ist gemäß der vorliegenden Erfindung variabel und öffnet sich zumindest im Abgabebereich. Vorzugsweise öffnet sich der Querschnitt der Öffnungen der rotierenden Förderscheibe im Abgabebereich in radialer Richtung. Auf diese Weise kann eine schnelle und sichere sowie feste Aufnahme der Samenkörner gewährleistet werden, was durch einen hohen Luftstrom unterstützt werden kann. Um mit möglichst niederen Drücken zu arbeiten, bzw. damit möglichst wenig Druckverlust durch Strömungswiderstand entsteht, ist es sinnvoll, mit relativ großen Querschnitten zu arbeiten.

Wie bereits zuvor mehrfach erwähnt, sind bei der erfindungsgemäßen Einzelkorndosiervorrichtung die im Umfang geschlossenen Öffnungen durch wenigstens eine feststehende Führungsscheibe und durch die rotierende Förderscheibe gebildet. Dabei ist die Förderscheibe vorzugsweise parallel und eng beabstandet zur mindestens einen Führungsscheibe angeordnet. Die Scheiben können wahlweise mit ihren zueinander gewandten Seitenflächen aufeinander gleiten. Um im Abgabebereich die sich öffnenden Querschnitte der Förderöffnungen zu realisieren, weist die Führungsscheibe über den Verlauf des Aufnahme- Vereinzelungs- und Förderbereichs eine ringsegmentförmige Nut mit Führungskanten auf, die einen Förderweg der mittels der rotierenden Förderscheibe geförderten, vereinzelten Körner beschreiben. Vorzugsweise münden diese ringsegmentförmigen Kanten der Führungsscheibe tangential in einen geradlinigen oder leicht gekrümmten Verlauf, der den Abgabebereich definiert. Zumindest im Abgabebereich fungiert dann die innere Führungskante gleichzeitig als Abstreifer für die Körner, da der Verlauf vom Förderbereich von der Krümmung in eine Gerade mündet, die dafür sorgt, dass die zuvor auf einer Kreisbahn bewegten Körner in eine Gerade gezwungen werden, bis sie am Ende des Abgabebereichs in gerader Bewegungsrichtung abgegeben werden. Dabei werden sie mittels der geradlinigen inneren Führungskante vom Förderelement abgestreift.

Die Förderscheibe ist vorzugsweise parallel und eng beabstandet zur wenigstens einen Führungsscheibe angeordnet. Dabei ist es sinnvoll, wenn eine Abdichtung zwischen Führungs- und Förderscheibe weitgehend berührungslos mittels einer Spaltdichtung vorgesehen ist.

Gemäß einer weiteren Ausgestaltung der Erfindung verläuft der Abgabebereich der Führungsscheibe annähernd senkrecht nach unten. Der Abgabebereich und insbesondere die innere Führungskante bilden ein Abstreifelement für die von der rotierenden Förderscheibe abzutrennenden Körner. Bei der Kornabgabe werden die geschlossenen Öffnungen derart geöffnet, indem die Förderscheibe sich unter der Führungsscheibe so wegdreht, dass die Innenkante der Führungsscheibe die Körner aus der gebildeten Öffnung ausstreicht. Durch die radiale Öffnung der luftströmungsbeaufschlagten Öffnungen müssen die Körner bei der Kornabgabe keine axiale Bewegung in Bezug zur Förderscheibe ausführen. Nach gleichem Prinzip kann auch eine rotierende Fördertrommel vorgesehen sein, von deren Außenumfang die Körner in eine geradlinige Bewegung umgelenkt und anschließend abgestreift werden.

Wahlweise kann die Führungsscheibe auch anders geformt bzw. als beliebig geformtes Abstreifelement ausgebildet sein. Typischerweise ist die Führungskante so gestaltet, dass die dadurch gebildete Führung für die von der Förderscheibe gehaltenen und geförderten Körner im Bereich der Abgabekammer im Außenradius eine Radiuserweiterung erfährt. Zudem kann die Führungsscheibe so ausgebildet sein, dass die Körner vor der Kornabgabe durch die Gestaltung der Führungsscheibe im Zusammenspiel mit der Förderscheibe eine gerade, lineare Bewegung bis zur Kornabgabe ausführen. Zusätzlich wird im Abgabebereich der Unterdruck an den Öffnungen der rotierenden Förderscheibe abgeschnitten, so dass die Körner senkrecht nach unten abgegeben werden können. Der linear verlaufende Abgabebereich kann ab dieser Vakuum- bzw. Überdruckbarriere eine sinnvolle Länge von bspw. ca. 10 mm aufweisen, wobei diese Länge je nach zu vereinzelnden Körnern und sonstigen baulichen Randbedingungen auch nach oben oder unten differieren kann.

Die Förderscheibe kann insbesondere als runde drehbare Scheibe ausgebildet sein, welche Förderschlitze aufweist, die nach außen hin offen sind, und die in Zusammenwirkung mit der Führungsscheibe die Förderöffnungen bilden. Vorzugsweise erstrecken sich die Förderschlitze jeweils sternförmig nach außen und weisen ggf. jeweils einen gegen die Rotationsrichtung der Förderscheibe gekrümmten Verlauf auf. Durch die Gestaltung der Förderschlitze in der Förderscheibe führen die Körner im linear bewegten Bereich bei gleichmäßiger Drehung der Förderscheibe eine gleichmäßige Bewegung mit weitgehend konstanter Geschwindigkeit aus und können dadurch gleichmäßig abgegeben und besser abgestreift werden. Die gleichmäßige Abgabe der Körner von der Förderscheibe wird dadurch verbessert, dass die Förderscheibe mit ihrem Außenumfang und mit der Länge ihrer gekrümmten Förderschlitze über die ringsegmentförmige Kante der Führungsscheibe und damit über einen Außenförderumfangskreis hinausragt.

Zudem wird eine genaue Abgabe der Samenkörner dadurch verbessert, dass jede Öffnung, welche die einzelnen Körner transportiert, in den freien Raum führt. D.h. die Seiten, welche das Öffnungsloch bilden, hören einfach auf, und geben das Korn auf der bisherigen Bewegungsebene frei. Dadurch ist ein gleichmäßiger Bewegungsablauf bei der Kornabgabe möglich, und die Körner müssen keine kurze senkrechte Bewegung zur Hauptabgaberichtung machen, was sie tun müssten, wenn sie vertieft aus einem Bohrloch o. dgl. von einer Förderscheibe tangential abgegeben würden. Zudem werden die Saatgutkörner bei der Kornabgabe in einer gerade gerichteten Bahn abgegeben, und zwar so, dass die Körner eine gewisse Zeit geführt werden und nicht nur durch das plötzliche Aufhören der Fliehkraft. Dies wird erreicht durch das Zusammenspiel von mindestens drei Teilen und einer leichten Luftströmung. Erstens die Tiefenbegrenzung, auf der das Samenkorn gleitet. Zweitens ein feststehendes Abstreifelement, das am Ende einen geradlinigen Verlauf aufweist, welches die Kornbewegung auf einer geraden Bahn hält, und das eine Seite der Öffnung bildet. Drittens ein Öffnungselement mit mindestens einer Seite, welche das Samenkorn voran schiebt. Die Luftströmung hält das Korn an der Tiefenbegrenzung, evtl. auch am Abstreifelement, welches am Ende gerade ist (falls keine parallele Gegenführung zum feststehenden Abstreifelement existiert), bis die Luftströmung so schwach wird, dass das Korn seine Trägheitsbewegung gekoppelt mit der Erdanziehungskraft nachgeht.

Um bei einer Scheibenlösung die gerade Führungsbewegung etwas länger zu realisieren (um auch dem Luftströmungsabbau etwas Raum zu geben), und die Auflösung der geschlossenen Öffnung schnell zu erreichen, was zu einer exakteren Abgabe führt, kann die Förderscheibe einen größeren Außenradius besitzen als äußere Führungskante der Förderöffnung, wobei die Scheibe etwas länglichere Förderschlitze aufweist. Um bei einer Scheibenlösung eine gerade gleichmäßige Öffnungsbewegung zu erreichen, müssen dabei die länglichen Förderschlitze auf der Scheibe eine Krümmung gegen die Laufrichtung haben. Zudem ist es von Vorteil, wenn die gekrümmten Förderschlitze nach außen hin leicht breiter werden, was eine mögliche Verklemmung des Korns verhindert. Um bei einer Scheibenlösung eine gute Aufnahme zu erreichen werden am Kornaufnahmebereich drei Seiten der Öffnung (bei vereinfachter vierseitiger Betrachtung) von der Scheibe gebildet. Erst im Abgabebereich werden zwei Seiten bzw. eine Seite der Öffnung von der drehbaren Scheibe gebildet. Bei der Führungsübergabe der Innenradiusseite der Öffnung, schmiegt sich ein feststehendes Abstreifelement (welches am Ende gerade ist) nahezu an den Öffnungsinnenradiuskreis an, dabei erweitert sich auch der Öffnungsaußenkreisradius, um ein verklemmen des Korns zu verhindern.

Gemäß einer weiteren Ausgestaltung der Erfindung rotiert die Förderscheibe parallel und beabstandet zu einer Tiefenbegrenzung zur Definition der Eintauchtiefe der jeweiligen Körner in die Öffnungen. Wahlweise kann die Förderscheibe jedoch auch nur abschnitts- bzw. teilweise parallel zur Tiefenbegrenzung rotieren. Daneben ist auch eine Ausführungsvariante denkbar, bei der die Förderscheibe leicht schräg zur Tiefenbegrenzung läuft, so dass diese eine variable Eintauchtiefe bewirken kann. Sinngemäß gleiches gilt für eine radiale Betrachtungsweise bei einer Fördertrommel, die konzentrisch zu einer ringförmigen Tiefenbegrenzung mit kleinerem Radius als die Trommel rotiert.

Der größtmögliche Strömungsquerschnitt für eine Korneinbettung wird erreicht indem man das Samenkorn ca. zur Hälfte in eine Vertiefung bringt, und Ringsherum einen Druckunterschied, bzw. Luftströmung hat.

So kann insbesondere in axialer Richtung beabstandet zu den Öffnungen der Förderscheibe ein Gleitsteg vorgesehen sein, der zumindest abschnittsweise einen kreisringsegmentförmigen Verlauf parallel zur ringsegmentförmigen Kante der Führungsscheibe aufweist. Die Tiefenbegrenzung ist dabei mindestens unter einem Teilbereich der Öffnung ausgebildet. Ggf. kann die Tiefenbegrenzung auch nur in einem bestimmten Bereich der Förderstrecke ausgebildet sein. Um dies zu erreichen und einen Durchgang des Samenkorns mit dem Luftstrom zu vermeiden, kann eine Tiefenbegrenzung für das Korn in dem Loch bzw. von verschiedenen Bauteilen begrenzte Öffnung sinnvoll sein. Um wiederum die Luftströmung möglichst wenig zu behindern, muss die Tiefenbegrenzung unter der Öffnung, möglichst schnell in ein größeres Volumen übergehen, um den Luftströmungswiderstand klein zu halten, was durch ein weiteres Absetzen der Tiefenbegrenzung weg von der Ebene der Öffnung erreicht wird. Eine noch größere Luftströmung wird erreicht, wenn dies beidseitig oder mehrseitig realisiert wird.

Die Tiefenbegrenzung muss unterhalb und entlang des Öffnungskreises verlaufen, bei größeren Körnern ggf. auch nur im Abgabebereich, und kann je nach zu vereinzelndem Saatgut unterschiedlich schmal gehalten sein. Die Tiefenbegrenzung kann auch schmäler als die darüber liegende Öffnung sein, sowie auch breiter oder auch gleich breit, je nach dem wie die zu vereinzelnden Körner und das Gesamtsystem dies verlangen.

Einseitig zur Tiefenbegrenzung ist eine Vertiefung (Strömungskanal) vorhanden. Wahlweise kann auch beidseitig zur Tiefenbegrenzung eine Vertiefung (Strömungskanal) vorhanden sein. Im Abgabebereich müssen Querstege o. dgl. vorgesehen sein, die als Luftströmungsbarriere wirken und den Unterdruck im Abgabebereich abschneiden, so dass die Körner von der inneren Führungskante abgestrichen werden können.

Ein Ausführungsbeispiel kann auch eine Schnecke vorsehen. Hier sind von Anfang an die Öffnungsseiten je zwei Seiten von einem festen Führungsschlitz gebildet und die beweglichen zwei Öffnungsseiten von einer beweglichen Schnecke. Die Tiefenbegrenzung muss auch hier gegeben sein, z.B. durch eine erhöhte Schneckenwellenachse.

Im Förderbereich kann wahlweise ein zusätzlicher Kornabstreifer zur Vereinzelung und regelmäßigen Abgabe der Körner in einen Förderbereich vorgesehen sein. Grundsätzlich sind jegliche Gestaltungsformen für den Abstreifer möglich, beispielsweise mechanische Kornabstreifer, pneumatische Kornabstreifer oder pneumatisch-mechanische Kornabstreifer.

Der Kornsammelraum kann beispielsweise auch eine Luftzuführung zur Verwirbelung und/oder zur Unterstützung einer Kornaufnahme durch die Förderscheibe innerhalb des Kornsammelraums aufweisen. Die luftunterstützte Verwirbelung kann insbesondere durch eine oder mehrere Luftzuführungen erfolgen. Die luftunterstützte Verwirbelung kann auch durch die Luftströmung der Vereinzelung erfolgen. Bei dieser Ausführungsvariante bildet der Kornsammelraum eine Art Wirbelkammer, die ständig mit zugeführter Luft beaufschlagt wird, um auf diese Weise eine ständige Kornbewegung zu erhalten, die Verstopfungen bzw. Blockaden verhindert, so dass alle Öffnungen des Förderelements jeweils mit einzelnen Körnern beaufschlagt werden. Eine weitere Ausgestaltung der Erfindung sieht im Kornsammelraum eine von zugeführter Luft angeströmte Wirbelnase vor. Eine Luftstromführung der Vereinzelungsluftströmung erfolgt an der Wirbelnase.

Die Bildung der Öffnungsbohrung muss aus dünnem Material erfolgen um genügend Raum für die erforderliche Luftströmung um die Öffnung zu geben und eine Abstreifung von zu vielen Körnern nicht zu stark einschränkt, sowie bei der Scheibenlösung ein möglichst kleinen Scheibenrückführungsquerschnitt in den Bereich der gerichteten Strömungsluft zu erreichen.

Der Strömungsluftkanal resultierend durch die abgesetzte Tiefenbegrenzung kann zum Kornabgabebereich hin Strömungsluftbarrieren besitzen, so dass die Strömung am Öffnungsrand bei der Kornaufnahme größer ist als bei der Kornabgabe, vorzugsweise vor dem Verlassen in den freien Raum.

Vorzugsweise erfolgt die Abdichtung zwischen Führungs- und Förderscheibe berührungslos (Spaltdichtung). Der Luftströmungsausgang befindet sich auf der Gleitstegseite im Bereich der Kornaufnahme oder Kornabstreifer.

Eine weitere Ausführungsvariante der erfindungsgemäßen Einzelkorndosiervorrichtung sieht beispielsweise vor, dass eine Wirbelkammer mit einem Druckanschluss zur Luftzuführung zur Verwirbelung und/oder zur Unterstützung einer Kornaufnahme durch die Förderscheibe innerhalb des Kornsammelraums und/oder der Wirbelkammer vorgesehen ist. In der Wirbelkammer kann zudem eine von Luft angeströmte Wirbelnase zur Luftstromführung in der Wirbelkammer vorhanden sein. Weiterhin kann zwischen der Wirbelkammer, oberhalb der Wirbelnase und dem Abgabebereich ein enger Durchgang vorgesehen sein, der für einen ständigen Unterdruck im Bereich der Wirbelkammer sorgt und dafür sorgt, dass in der Wirbelkammer umher fliegende Körner diese nicht verlassen. Nach dem engen Durchgang erfolgt eine Querschnittserweiterung im Bereich der Abgabekammer. Am engen Durchgang ist die Luftströmung entgegen gesetzt zur Körnförderrichtung mit der Scheibe. Dadurch wird eine sehr kleine Bauform erst möglich. Gleichzeitig sorgt dieser Durchgang dafür, dass die für die Funktion der Vereinzelung erforderliche Luftmenge reduziert wird. Der enge Durchgang kann insbesondere in axialer Richtung in Bezug zu einer axialen Höhe der Wirbelkammer reduziert sein. Die Wirbelnase dient zur Aufteilung des Luftstroms aus dem Zuluftanschluss und für ein ständiges Umwälzen der Körner in der Wirbelkammer. Die Wirbelnase kann vorzugsweise so ausgestaltet sein, dass dadurch der Luftstrom an der Wirbelnase aufgeteilt, bspw. annähernd halbiert wird. Zudem kann ein Rührelement mit dem Förderelement verbunden sein, das dafür sorgt, dass im Bereich der Kornaufnahme die Körner in Bewegung gehalten werden.

Weiterhin kann zur Vermeidung einer Schmutzansaugung ein externer Zuluftanschluss vorhanden sein, der den Luftausgleich im Vereinzelungsaggregat vornimmt, so dass dort kein unnötiger Unterdruck aufgebaut wird.

Die Vorratskammer kann bspw. durch einen größeren, vorgeschalteten Behälter befüllt werden. Die Vorratskammer kann durch ein pneumatisches Fördersystem befüllt werden. Zudem kann eine Luftabstreifung der Körner vorgesehen sein, um die bei der Aufnahme zuviel mitgenommenen Körner von der Öffnung abzubringen, so dass nur noch ein Korn an einer Öffnung hängt. Eine Luftströmung dient zur Unterstützung der Körneraufnahme, wo die Öffnungen die Samenkörner aufnehmen können. Dabei sind weitgehend jegliche Gestaltungsformen für den Kornabstreifer möglich, beispielsweise mechanische Kornabstreifer, pneumatische Kornabstreifer oder pneumatisch-mechanische Kornabstreifer.

Eine weitere Ausführungsvariante der Einzelkorndosiervorrichtung sieht vor, dass die Öffnung für den Korntransport im Aufnahmebereich von drei Seiten her durch die Förderscheibe und einseitig nach außen durch die Führungsscheibe begrenzt ist und dann übergeht in einen Bereich, in dem die Öffnung an zwei Seiten durch die Förderscheibe und eine bis zwei Seiten durch die Führungsscheibe begrenzt ist/sind.

Von Vorteil ist es, dass durch die radiale Öffnung der luftströmungsbeaufschlagten Öffnungen die Körner bei der Kornabgabe keine axiale Bewegung in Bezug zur Förderscheibe ausführen müssen. Der Durchmesser der Förderscheibe ist zweckmäßigerweise größer als der Durchmesser der Führungsscheibenaußenkante. Zudem kann der Öffnungsquerschnitt der Öffnungen während eines Umlaufs der Förderscheibe variieren. Dem Kornabgabebereich kann eine zusätzliche Vakuumbarriere vorgeschaltet sein.

Die vereinzelte Kornabgabe aus dem Gehäuse kann unmittelbar in einen Saatschlitz oder in ein Fallrohr münden. Die vereinzelte Kornabgabe aus dem Gehäuse kann jedoch auch unmittelbar in einen Förderluftstrom münden.

Der Antrieb der Dosiervorrichtung kann beliebig ausgestaltet sein, beispielsweise durch einen Ketten, Riemen- oder Kardanantrieb, oder auch direkt angetrieben sein durch pneumatische, hydraulische oder elektrische Antriebe.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügte Zeichnung Bezug nimmt.
Fig. 1 zeigt eine perspektivische Darstellung einer Ausführungsvariante einer erfindungsgemäßen Einzelkorndosiervorrichtung.
Fig. 2 zeigt eine weitere perspektivische Ansicht der Einzelkorndosiervorrichtung gemäß Fig. 1.
Fig. 3 zeigt ein teilweise geöffnetes Gehäuse der Einzelkorndosiervorrichtung gemäß Fig.1.
Fig. 4 zeigt eine Schemadarstellung einer im Gehäuse rotierenden Förderscheibe und deren wesentliche Komponenten.
Fig. 5 zeigt eine Gehäusehälfte mit abgenommener Förder- und Führungsscheibe und dadurch sichtbar gemachten Strömungskanälen.
Fig. 6 zeigt eine Seitenansicht auf eine Schmalseite des trommelförmigen Gehäuses zur Verdeutlichung einer Spaltdichtung zwischen Förder- und Führungsscheibe.
Fig. 7 zeigt in zwei Ansichten eine Ausführungsvariante der Einzelkorndosiervorrichtung, bei der die Förderscheibe vor der Führungsscheibe angeordnet ist.
Fig. 8 zeigt in zwei weiteren Ansichten einen relativ kurz ausgeführten, in Nähe des Abgabebereichs angeordneten Gleitsteg, der eine Tiefenbegrenzung für die Körner bildet.
Fig. 9 zeigt zwei verschiedene Ausführungsvarianten einer Förderscheibe.

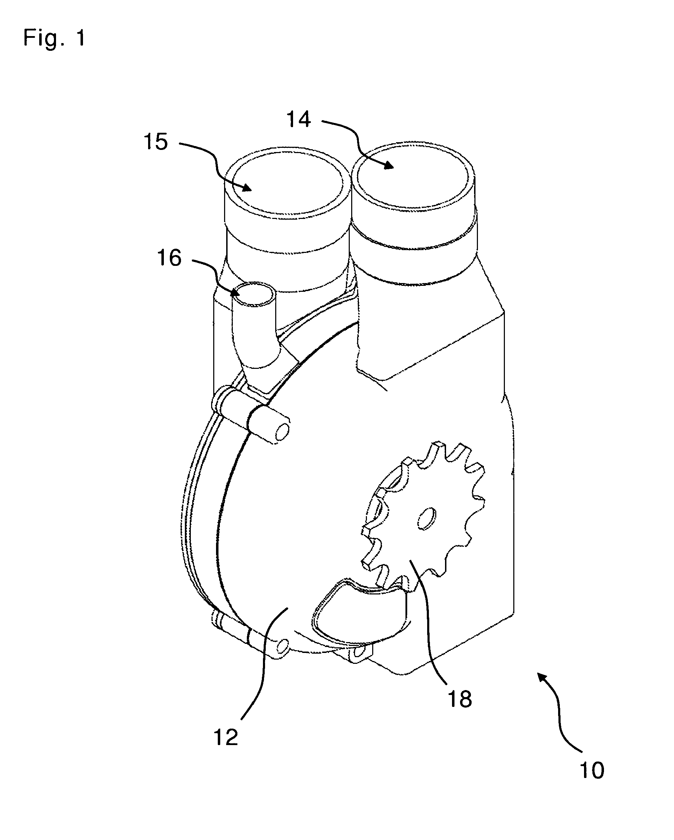

Anhand der schematischen Darstellungen der Figuren 1 bis 9 wird eine bevorzugte Ausführungsvariante einer erfindungsgemäßen Einzelkorndosiervorrichtung 10 näher erläutert. Gleiche Teile in den Figuren sind dabei grundsätzlich mit gleichen Bezugsziffern bezeichnet, weshalb auf eine mehrfache Erläuterung teilweise verzichtet wird. Die nachfolgend näher beschriebene und in ihren Einzelheiten anhand der Figuren erläuterte Einzelkorndosiervorrichtung 10 eignet sich insbesondere zur Ausbringung von Mais, Sonnenblumen oder ähnlich geformtem und/oder dimensioniertem Saatgut.

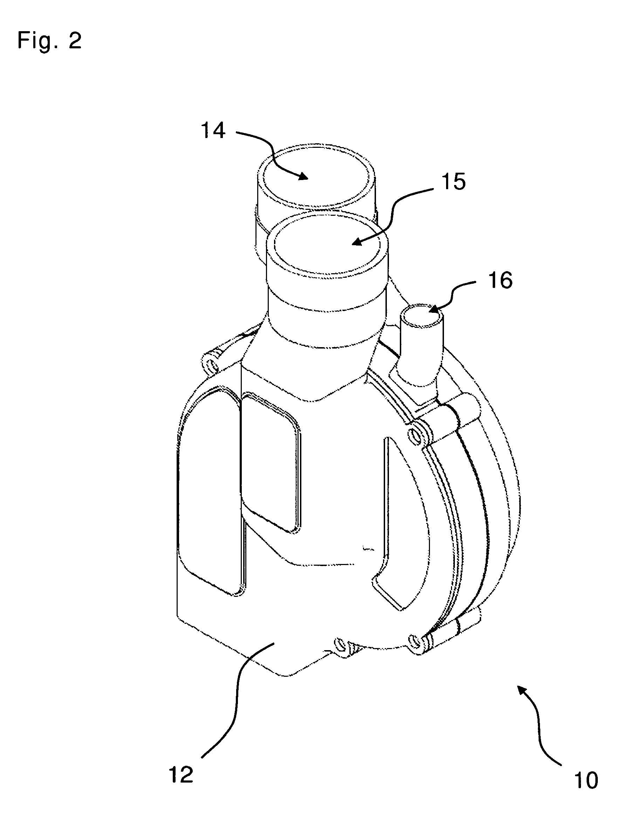

Die perspektivischen Darstellungen der Figuren 1 und 2 zeigen ein trommelförmiges Gehäuse 12 der Einzelkorndosiervorrichtung 10, das an einer Oberseite einen größeren Anschlussstutzen als Unterdruckanschluss 14 und einen kleineren Anschlussstutzen als Druckanschluss 16 für eine Vereinzelung und/oder Verwirbelung der mittels eines Förderstutzens 15 in eine Vorratskammer geleiteten Körner aufweist. An einer Flachseite des Gehäuses 12 (vgl. Fig. 1) ist ein Antriebsritzel 18 für einen Drehantrieb einer in den folgenden Figuren näher erläuterten im Gehäuse 12 drehbar gelagerten rotierenden Förderscheibe angeordnet. Das Antriebsritzel 18 dient zur Drehübertragung mittels einer Rollenkette (nicht dargestellt), die bspw. mit einer zentralen Antriebswelle oder mit einem separaten Antriebsmotor gekoppelt sein kann.

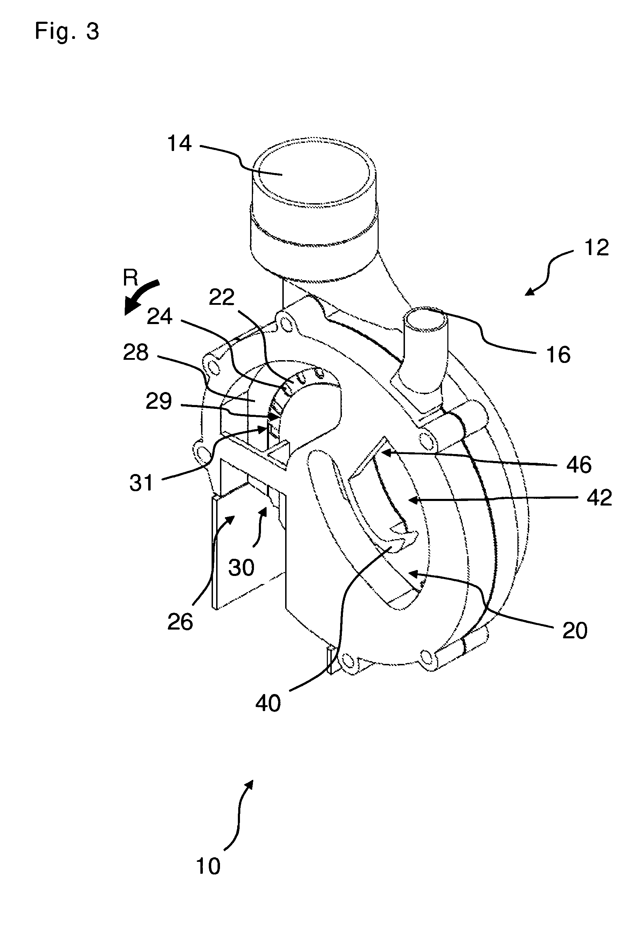

Die perspektivische Darstellung der Fig. 3 zeigt das einseitig offene Gehäuse 12 der Einzelkorndosiervorrichtung 10 von einer dem Antriebsritzel 18 abgewandten, gegenüber liegenden Flachseite. Der dort normalerweise angeordnete Deckel mit Kornzuführung in die Vorratskammer 20 ist der besseren Übersichtlichkeit halber weggelassen. Die Vorratskammer 20 dient als Zwischenbehälter bzw. als Kornsammelraum zur Zuführung zu vereinzelnder Körner zur rotierenden Förderscheibe 22 und kann mit einer Rührwelle, auf der Drehachse befestigt, unterstützend gefüllt werden. Die Förderscheibe 22 weist auf ihrer Seitenfläche eine Vielzahl von regelmäßig voneinander beabstandeten, jeweils mit Unterdruck aus dem Unterdruckanschluss 14 beaufschlagbaren Öffnungen 24 zur Kornaufnahme, -vereinzelung und Förderung in Umfangsrichtung R der Förderscheibe 22 zu einem Abgabebereich 26 auf. Die Öffnungen 24 weisen in einem dem Abgabebereich 26 vorgeordneten Aufnahme-, Vereinzelungs- und Förderbereich innerhalb des Gehäuses 12 einen geschlossenen Umfang auf. Ein Öffnungsquerschnitt der Öffnungen 24 der rotierenden Förderscheibe 22 ist variabel und öffnet sich Abgabebereich 26, so dass die Körner in regelmäßigen Abständen von der Förderscheibe 22 abgegeben werden und senkrecht nach unten aus dem Abgabebereich 26 fallen können.

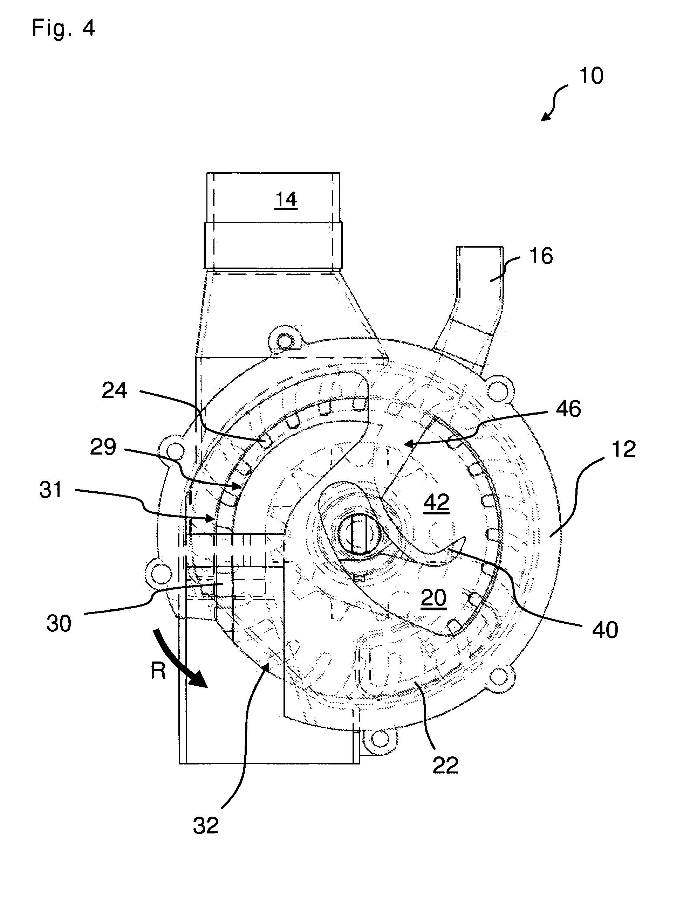

Wie anhand der schematischen Darstellung der Fig. 4 erkennbar, öffnet sich der Öffnungsquerschnitt der Öffnungen 24 der rotierenden Förderscheibe 22 im Abgabebereich 26 in radialer Richtung. Dabei werden die Öffnungen 24 durch eine feststehende Führungsscheibe 28 und die rotierende Förderscheibe 22 gebildet. Diese Führungsscheibe 28 ist parallel und eng beabstandet zur Förderscheibe angeordnet, wie dies anhand der Figuren 2 und 3 verdeutlicht ist. Die Führungsscheibe 28 weist über den Verlauf des Aufnahme- Vereinzelungs- und Förderbereichs eine ringsegmentförmige Führungskante 31 auf, die einen Förderweg der mittels der rotierenden Förderscheibe 22 geförderten, vereinzelten Körner beschreibt. Diese ringsegmentförmige Führungskante 31 der Führungsscheibe 28 mündet tangential in einen geradlinig nach unten führenden Verlauf, der den Abgabebereich 26 definiert. Der geradlinig nach unten verlaufende Abschnitt der Nut 30 im Abgabebereich 26 bildet damit gleichzeitig einen Abstreifer für die von der rotierenden Förderscheibe 22 abzutrennenden Körner, so dass diese in regelmäßigen Abständen nach unten fallen. Gleichzeitig ist im Abgabebereich 26 der an den Öffnungen 24 der rotierenden Förderscheibe 22 anliegende Unterdruck abgeschnitten.

Die Führungsnut 30 weist eine innere Kante 29 kleineren Durchmessers und eine äußere Kante 31 größeren Durchmessers auf.

Wie mit Fig. 4 verdeutlicht, ist die Förderscheibe 22 als runde drehbare Scheibe ausgebildet, welche Förderschlitze 32 aufweist, die nach außen hin offen sind, und die in Zusammenwirkung mit der Führungsscheibe 28 die Förderöffnungen bilden. Die Förderschlitze 32 erstrecken sich jeweils sternförmig nach außen und weisen zudem jeweils einen gegen die Rotationsrichtung R der Förderscheibe 22 gekrümmten Verlauf auf. Die Förderscheibe 22 ragt mit ihrem Außenumfang und mit der Länge ihrer gekrümmten Förderschlitze 32 über die ringsegmentförmige Nut bzw. äußere Führungskante 31 der Führungsscheibe 28 und damit über einen Außenförderumfangskreis hinaus.

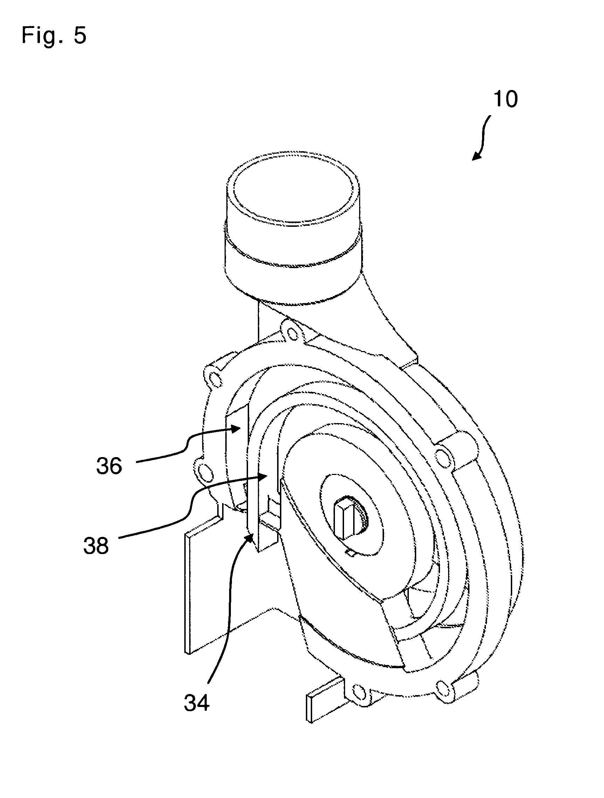

Bei der schematischen Perspektivdarstellung der Fig. 5 ist sowohl die Förderscheibe 22 als auch die Führungsscheibe 28 entfernt, so dass ein kreisringsegmentförmiger Gleitsteg 34 erkennbar ist, der eine Tiefenbegrenzung zur Definition der Eintauchtiefe der jeweiligen Körner in die Öffnungen 24 der Förderscheibe 22 bildet. Ein axialer Abstand zwischen dem parallel zur Kante 31 verlaufenden und ungefähr die gleiche Breite wie die Öffnungsbreite an der Nut 30 aufweisenden Gleitsteg 34 definiert dabei diese Eintauchtiefe der Körner. Zu beiden Seiten dieses Gleitstegs 34 befinden sich jeweils Strömungskanäle 36 und 38, an denen der Unterdruck des Unterdruckanschlusses 14 anliegt. Die Strömungskanäle 36 und 38 sorgen dafür, dass an jeder Stelle des gekrümmten Verlaufs der Führungskante 30 vor dem geradlinigen Abgabebereich 26 der Unterdruck zum Fixieren der Körner an den Öffnungen 24 anliegt.

Der Kornsammelraum bzw. die Vorratskammer 20 weisen mit dem Druckanschluss 16 eine Luftzuführung zur Verwirbelung und/oder zur Unterstützung einer Kornaufnahme durch die Förderscheibe 22 innerhalb des Kornsammelraums 20 auf (vgl. Fig. 3). Dabei ist im Kornsammelraum 20 eine von der zugeführten Luft angeströmte Wirbelnase 40 vorgesehen. Mittels dieser Wirbelnase 40 erfolgt eine Luftstromführung der Vereinzelungsluftströmung. Der Bereich unterhalb der Wirbelnase 40 bildet die Vorratskammer 20, während ein Bereich oberhalb der Wirbelnase 40 eine Wirbelkammer 42 bildet. Zwischen Wirbelkammer 42 und dem links davon liegenden Bereich befindet sich ein relativ enger Durchgang 46. Dieser enge Durchgang 46 ist in axialer Richtung in Bezug zu einer axialen Höhe der Wirbelkammer 42 reduziert, so dass der Luftstrom durch diesen Durchgang 46 begrenzt ist.

Der Wellenstumpf der Antriebswelle kann im gezeigten Ausführungsbeispiel mit einem exzentrisch angeordneten Stift o. dgl. versehen sein, der als Rührelement dienen kann, so dass die daran anliegenden Körner permanent verrührt werden.

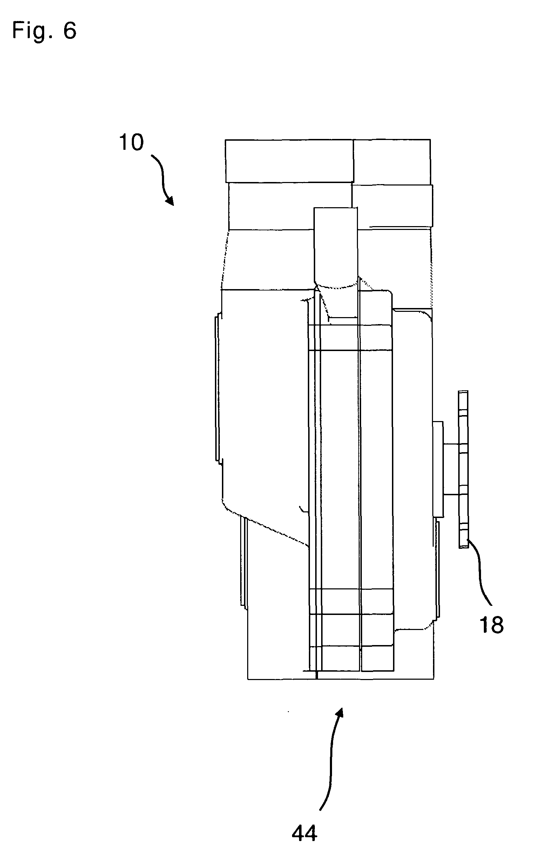

Wie anhand der Fig. 6 lediglich angedeutet ist, kann eine Abdichtung zwischen Führungsscheibe 28 und der Förderscheibe 22 vorzugsweise berührungslos mittels einer Spaltdichtung 44 gewährleistet sein.

Bei der gezeigten Einzelkorndosiervorrichtung 10 kann die vereinzelte Kornabgabe aus dem Gehäuse 12 wahlweise unmittelbar in einen Saatschlitz bzw. in ein Fallrohr (nicht dargestellt) münden. Die vereinzelte Kornabgabe kann jedoch aus dem Gehäuse 12 auch unmittelbar in einen Förderluftstrom (ebenfalls nicht dargestellt) münden.

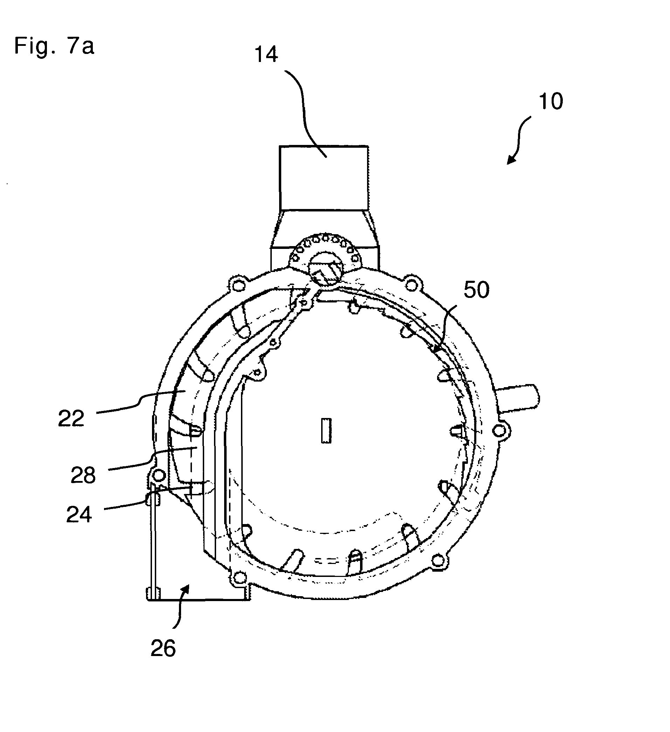

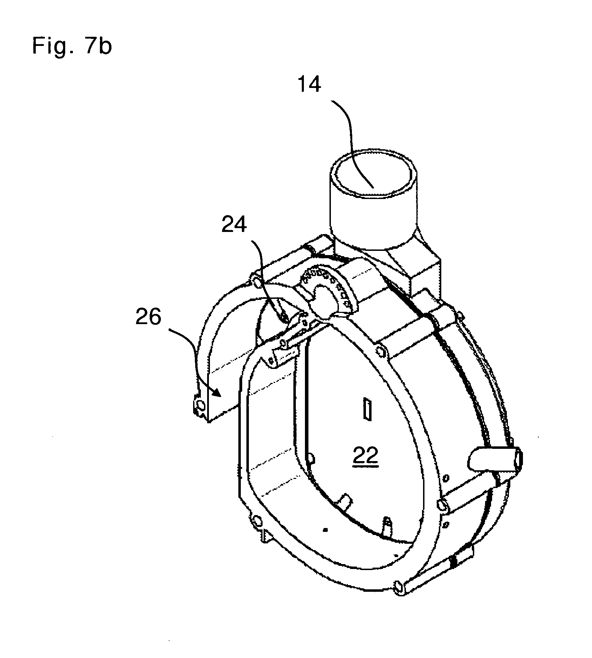

Die beiden Darstellungen der Fig. 7a und Fig. 7b zeigen in zwei Ansichten eine Ausführungsvariante der Einzelkorndosiervorrichtung, bei der die Förderscheibe 22 vor der Führungsscheibe 28 angeordnet ist. Diese ist in der Draufsicht der Fig. 7a von der Förderscheibe 22 annähernd verdeckt, befindet sich also in den Ansichten der Fig. 7a und 7b hinter der Förderscheibe. Eine Tiefenbegrenzung im Kornaufnahmebereich entsprechend der zuvor beschriebenen Ausführungsvariante ist hierbei nicht erforderlich, da die Eintauchtiefe der annähernd gleich dimensionierten Mais- oder Sonnenblumenkörner weitgehend nur von der Dimensionierung der Öffnungen 24 abhängt. Erkennbar ist in Fig. 7a weiterhin ein mechanischer Kornabstreifer 50, der als gezackte Linie zwischen einer 12-Uhr-Stellung und einer 4-Uhr-Stellung der mittigen Scheibe angedeutet ist.

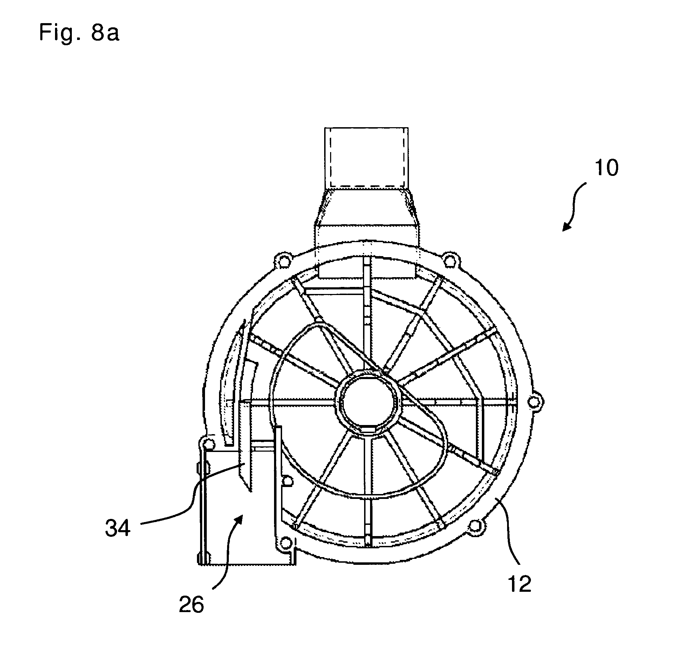

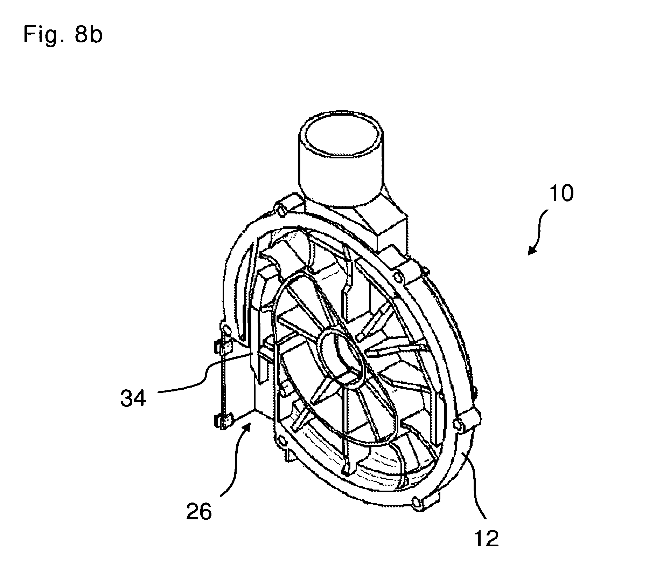

Die beiden Darstellungen der Fig. 8 zeigen in zwei weiteren Ansichten einen relativ kurz ausgeführten, in Nähe des Abgabebereichs 26 angeordneten Gleitsteg 34, der eine Tiefenbegrenzung für die Körner bildet. Im Zusammenhang mit der Anordnung der Förderscheibe 22 und der Führungsscheibe 28 gemäß Fig. 7 reicht die Länge des Gleitsteges 34 aus, wie sie in Fig. 8 dargestellt ist, um den Körnern im Abgabebereich die gewünschte Führung zu geben.

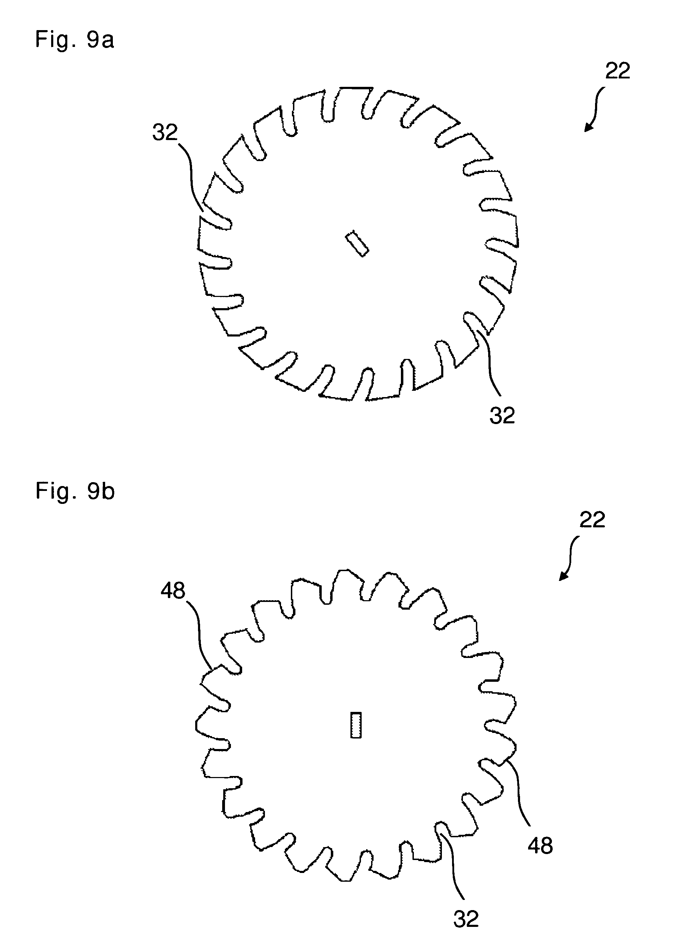

Die Darstellungen der Fig. 9 zeigen zwei verschiedene Ausführungsvarianten einer Förderscheibe 22. Während die Förderscheibe 22 gemäß Fig. 9 die bereits zuvor beschriebene Kontur mit den durchgängigen, weitgehend konstant breiten Förderschlitzen 32 aufweist, sind bei der Förderscheibe 22 gemäß Fig. 9b die dem jeweiligen Korn vorauseilende Kanten 48 im Bereich des Außenumfangs der Förderscheibe abgeschnitten oder abgeschrägt, was verhindert, dass das Korn beim Ablösen von der Förderscheibe 22 noch in ungewollter Weise von der voreilenden Kante in Umdrehungsrichtung in seiner Flugrichtung beeinflusst werden kann. Der Grad der Abschrägung und die Dimensionierung ist zweckmäßigerweise in Versuchen zu ermitteln.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen, der durch die nach folgenden Ansprüche definiert wird.

### Bezugszeichenliste:

- 10: Einzelkorndosiervorrichtung
- 12: Gehäuse
- 14: Unterdruckanschluss
- 15: Förderstutzen
- 16: Druckanschluss
- 18: Antriebsritzel
- 20: Vorratskammer
- 22: Förderscheibe / Förderelement
- 24: Öffnung
- 26: Abgabebereich
- 28: Führungsscheibe
- 29: innere Führungskante
- 30: Führungskante
- 31: äußere Führungskante
- 32: Förderschlitz
- 34: Gleitsteg / Tiefenbegrenzung
- 36: Strömungskanal
- 38: Strömungskanal
- 40: Wirbelnase
- 42: Wirbelkammer
- 44: Spaltdichtung
- 46: Durchgang
- 48: abgeschrägte Kante
- 50: mechanischer Kornabstreifer

- R: Umdrehungsrichtung (Förderscheibe)

## Patentansprüche

1. Einzelkorndosiervorrichtung (10), umfassend ein Gehäuse (12) mit einer Kornzuführung und wenigstens ein im Bereich eines Kornsammelraums (20) rotierendes Förderelement (22), das durch eine dünne Förderscheibe (22) gebildet ist und auf einer Seitenfläche eine Vielzahl von regelmäßig voneinander beabstandeten, jeweils mit einer Druckdifferenz beaufschlagbaren Öffnungen (24) zur Kornaufnahme, -vereinzelung und Förderung in Umfangsrichtung des Förderelements (22) zu einem Abgabebereich (26) aufweist, wobei die Öffnungen (24) in einem Aufnahme-, Vereinzelungs- und Förderbereich innerhalb des Gehäuses (12) einen geschlossenen Umfang aufweisen, wobei die sich über die gesamte Dicke des Förderelements bzw. der Förderscheibe (22) erstreckenden Öffnungen (24) zumindest temporär von Luft durchströmt sind, wobei sich der Öffnungsquerschnitt der Öffnungen (24) des rotierenden Förderelements (22) bzw. der rotierenden Förderscheibe (22) im Abgabebereich (26) in radialer Richtung öffnet, und wobei die Öffnungen (24) für den Korntransport im Aufnahmebereich von drei Seiten her durch die Förderscheibe (22) und einseitig nach außen durch die Führungsscheibe (28) begrenzt sind und dann übergehen in einen Bereich, in dem die Öffnungen an zwei Seiten durch die Förderscheibe (22) und eine bis zwei Seiten durch die Führungsscheibe (28) begrenzt sind.

2. Einzelkorndosiervorrichtung nach Anspruch 1, bei der dem Förderelement bzw. der Förderscheibe (22) eine äußere Führungskante (31) einer Führungsscheibe (28) zugeordnet ist, wobei die Förderscheibe (22) die äußere Führungskante (31) im Umfang überragt.

3. Einzelkorndosiervorrichtung nach Anspruch 2, bei der das Förderelement bzw. die Förderscheibe (22) vor der äußeren Führungskante (31), auf einer den Körnern zugewandten Seite angeordnet ist.

4. Einzelkorndosiervorrichtung nach einem der Ansprüche 1 bis 3, die einen Kornabstreifer im Abgabebereich (26) aufweist, der eine annähernd lineare Kornbewegung im Abgabebereich (26) definiert.

5. Einzelkorndosiervorrichtung nach einem der Ansprüche 1 bis 4, bei der die dem jeweiligen Korn vorauseilende Kante im Bereich des Außenumfangs der Förderscheibe (22) abgerundet, abgeschnitten oder abgeschrägt ist.

6. Einzelkorndosiervorrichtung nach einem der Ansprüche 1 bis 5, bei der der Abgabebereich (26) der Führungsscheibe (28) nach unten verläuft und ein Abstreifelement für die von der rotierenden Förderscheibe (22) abzutrennenden Körner bildet.

7. Einzelkorndosiervorrichtung nach einem der Ansprüche 1 bis 6, bei der die Kornabgabe nach unten unter Vermeidung einer Kollision mit Wandabschnitten vorgebbar ist.

8. Einzelkorndosiervorrichtung nach einem der Ansprüche 1 bis 7, bei der im Abgabebereich (26) die Druckdifferenz an den Öffnungen (24) der rotierenden Förderscheibe (22) abgeschnitten ist.

9. Einzelkorndosiervorrichtung nach einem der Ansprüche 1 bis 8, bei der sich Förderschlitze (32) der Förderscheibe (22) jeweils sternförmig nach außen erstrecken und jeweils einen gegen die Rotationsrichtung (R) der Förderscheibe (22) gekrümmten Verlauf aufweisen. -

10. Einzelkorndosiervorrichtung nach einem der Ansprüche 2 bzw. 3-9 wenn von Anspruch 2 abhängig, die zumindest in Teilbereichen unter den durch die Förderscheibe (22) und der Führungskante (31) gebildeten Öffnungen (24) eine Tiefenbegrenzung (34) aufweist, die parallel und beabstandet zu den Öffnungen (24) zur Definition der Eintauchtiefe der jeweiligen Körner verläuft.

11. Einzelkorndosiervorrichtung nach einem der Ansprüche 1 bis 10, bei der das Förderelement bzw. die Förderscheibe (22) zwischen zwei Funktionselementen rotierend angeordnet ist, die durch die Tiefenbegrenzung (34) und eine innere Führungskante (29) gebildet sind.

12. Einzelkorndosiervorrichtung nach einem der Ansprüche 1 bis 11, bei der der Öffnungsquerschnitt der Öffnungen (24) während eines Umlaufs der Förderscheibe (22) variiert.

13. Einzelkorndosiervorrichtung nach einem der Ansprüche 1 bis 12, bei der im Abgabebereich (26) die Druckdifferenz an den Öffnungen (24) der rotierenden Förderscheibe (22) abgeschnitten ist, wobei eine Druckdifferenzbarriere an den Öffnungen (24) dem Kornabgabebereich vorgeschaltet ist.

14. Einzelkorndosiervorrichtung nach einem der Ansprüche 1 bis 13, bei der die äußere Führungskante (31) der Führungsscheibe (28) über den Verlauf des Aufnahme-, Vereinzelungs- und Förderbereich ringsegmentförmig ausgebildet ist und tangential in einem geradlinigen, den Abgabebereich (26) definierenden Verlauf nach unten führt.

15. Einzelkorndosiervorrichtung nach Anspruch 14, bei der eine Führungsnut (30) die innere Führungskante (29) kleineren Durchmessers und die äußere Führungskante (31) größeren Durchmessers aufweist.

## Claims

1. Single grain metering device (10) comprising a housing (12) with a grain supply and at least one rotating feed element (22) located in the area of a grain storage chamber (20), said rotating feed element (22) being formed by a slender feed wheel (22) and comprising a multitude of seed openings (24) for receiving, separating and conveying seed grains in the circumferential direction of the feed element (22) to a discharge chamber (26), said seed openings (24) being arranged on a lateral surface of the feed wheel (22), spaced at regular intervals from each other and comprising the means for applying a pressure differential to each of the seed openings (24), wherein the seed openings (24) have a closed circumference within the housing (12) in the area for receiving, separating and conveying the seed grains, and wherein the seed openings (24) extend across the entire axial thickness of the feed element or the feed wheel (22), with an air flow at least temporarily passing through the seed openings (24), and wherein the opening cross section of the seed openings (24) of the rotating feed element (22) or rotating feed wheel (22) opens in a radial direction in the discharge chamber (26), and wherein the seed openings (24) for the grain transport are delimited on three sides in the receiving area by the feed wheel (22) and delimited outwardly on one side by the guide disc (28), the said seed openings (24) then passing to an area where they are delimited on two sides by the feed wheel (22) and delimited on one to two sides by the guide disc (28).

2. Single grain metering device according to claim 1 wherein the feed element or feed wheel (22) is associated with an outer guide edge (31) of a feed wheel (28), and wherein the circumference of the feed wheel (22) protrudes beyond the circumference of the outer guide edge (31).

3. Single grain metering device according to claim 2 wherein the feed element or feed wheel (22) is arranged in front of the outer guide edge (31) on a side facing the seed grains.

4. Single grain metering device according to one of the claims 1 to 3, further comprising a seed scraper in the discharge chamber (26), said seed scraper defining an approximately linear seed travel path in the discharge chamber (26).

5. Single grain metering device according to one of the claims 1 to 4 wherein the edge traveling ahead of the respective seed grain is rounded, cut off or beveled in the area of the outer circumference of the feed wheel (22).

6. Single grain metering device according to one of the claims 1 to 5 wherein the discharge chamber (26) of the guide disc (28) extends downward, forming a scraping element for the seed grains that are to be separated from the rotating feed wheel (22).

7. Single grain metering device according to one of the claims 1 to 6 wherein the grain discharge may be set to be performed downward and so as to avoid a collision with the wall sections.

8. Single grain metering device according to one of the claims 1 to 7 wherein the pressure differential is interrupted at the seed openings (24) of the rotating feed wheel (22) in the discharge chamber (26).

9. Single grain metering device according to one of the claims 1 to 8 wherein feed slots (32) of the feed wheel (22) each extend radially outward in a slight curve directed counter to the rotation direction (R) of the feed wheel (22).

10. Single grain metering device according to claim 2 or any one of the claims 3 to 9 if dependent on claim 2, further comprising, at least in parts, a depth limiter (34) underneath the seed openings (24) formed by the feed wheel (22) and by the guide edge (31), said depth delimiter (34) extending in parallel to and spaced apart from the seed openings (24), thus defining the engagement depth of the respective seeds.

11. Single grain metering device according to one of the claims 1 to 10 wherein the feed element or feed wheel (22) is arranged to rotate between two functional elements, which are formed by the depth delimiter (34) and an inner guide edge (29).

12. Single grain metering device according to one of the claims 1 to 11 wherein the opening cross section of the seed openings (24) varies over the duration of a rotation of the feed wheel (22).

13. Single grain metering device according to one of the claims 1 to 12 wherein the pressure differential is interrupted at the seed openings (24) of the rotating feed wheel (22) in the discharge chamber (26), and wherein a pressure differential barrier is provided at the seed openings (24) upstream of the grain discharge chamber.

14. Single grain metering device according to one of the claims 1 to 13 wherein the outer guide edge (31) of the guide disc (28) extends over the receiving, separating and conveying area in the form of an annular segment and leads tangentially downward in a straight line, thus defining the discharge chamber (26).

15. Single grain metering device according to claim 14 wherein a guiding groove (30) comprises the inner guide edge (29) having a smaller diameter than the guiding groove (30) and the outer guide edge (31) having a larger diameter than the guiding groove (30).

## Revendications

1. Dispositif de dosage monograine (10), comprenant un boîtier (12) ayant une alimentation de graines ainsi qu'au moins un élément transporteur (22) tournant au niveau d'un espace collecteur de graines (20) et qui est constitué par un mince disque de transport (22) et présente, sur une face latérale, une multitude d'ouvertures (24) espacées régulièrement les unes des autres, aptes à être soumises chacune à une différence de pression et destinées à recevoir, à individualiser et à transporter les graines dans la direction circonférentielle dudit élément transporteur (22) vers une zone de distribution (26), lesdites ouvertures (24) présentant, dans une zone de réception, d'individualisation et de transport à l'intérieur du boîtier (12), une circonférence fermée, les ouvertures (24) s'étendant sur l'ensemble de l'épaisseur de l'élément transporteur ou bien du disque de transport (22) étant traversées par de l'air au moins temporairement, la section d'ouverture desdites ouvertures (24) de l'élément transporteur rotatif (22) ou bien du disque rotatif de transport (22) s'ouvrant, dans la zone de distribution (26), en direction radiale, et les ouvertures (24) pour le transport des graines étant délimitées, dans la zone de réception, de trois côtés par ledit disque de transport (22) et d'un seul côté de l'extérieur par le disque de guidage (28) et passant ensuite à une zone où les ouvertures sont délimitées de deux côtés par le disque de transport (22) et d'un à deux côté(s) par ledit disque de guidage (28).

2. Dispositif de dosage monograine selon la revendication 1, dans lequel une arête extérieure de guidage (31) d'un disque de guidage (28) est associée à l'élément transporteur ou bien au disque de transport (22), ledit disque de transport (22) dépassant en circonférence ladite arête extérieure de guidage (31).

3. Dispositif de dosage monograine selon la revendication 2, dans lequel ledit élément transporteur ou bien le disque de transport (22), en amont de ladite arête extérieure de guidage (31), est disposé sur une face montrant vers les graines.

4. Dispositif de dosage monograine selon l'une quelconque des revendications 1 à 3, comprenant un racleur de graines dans la zone de distribution (26), qui définit un mouvement de graines approximativement linéaire dans la zone de distribution (26).

5. Dispositif de dosage monograine selon l'une quelconque des revendications 1 à 4, dans lequel l'arête qui est en avance sur la graine respective, dans la zone de la circonférence extérieure du disque de transport (22), est arrondie, coupée ou biseautée.

6. Dispositif de dosage monograine selon l'une quelconque des revendications 1 à 5, dans lequel ladite zone de distribution (26) du disque de guidage (28) s'étend vers le bas et forme un élément racleur pour les graines à détacher du disque tournant de transport (22).

7. Dispositif de dosage monograine selon l'une quelconque des revendications 1 à 6, dans lequel la distribution de graines vers le bas peut être déterminée en évitant une collision avec des sections de paroi.

8. Dispositif de dosage monograine selon l'une quelconque des revendications 1 à 7, dans lequel la différence de pression sur les ouvertures (24) du disque tournant de transport (22) est coupée dans la zone de distribution (26).

9. Dispositif de dosage monograine selon l'une quelconque des revendications 1 à 8, dans lequel des fentes de transport (32) du disque de transport (22) s'étendent chacune en étoile vers l'extérieur et présentent chacune une allure courbée à l'encontre du sens de rotation (R) du disque de transport (22).

10. Dispositif de dosage monograine selon l'une quelconque des revendications 2 ou bien 3 à 9 lorsqu'elles sont dépendantes de la revendication 2, qui présente, au moins dans des zones partielles au-dessous des ouvertures (24) formées par ledit disque de transport (22) et ladite arête de guidage (31), un moyen limiteur de profondeur (34) qui s'étend parallèlement aux et à distance des ouvertures (24) pour définir la profondeur de plongée des graines respectives.

11. Dispositif de dosage monograine selon l'une quelconque des revendications 1 à 10, dans lequel ledit élément transporteur ou bien ledit disque de transport (22) est disposé à rotation entre deux éléments fonctionnels qui sont formés par ledit moyen limiteur de profondeur (34) et une arête intérieure de guidage (29).

12. Dispositif de dosage monograine selon l'une quelconque des revendications 1 à 11, dans lequel la section d'ouverture des ouvertures (24) varie pendant une rotation complète du disque de transport (22).

13. Dispositif de dosage monograine selon l'une quelconque des revendications 1 à 12, dans lequel la différence de pression sur les ouvertures (24) du disque tournant de transport (22) est coupée dans la zone de distribution (26), une barrière de différence de pression sur les ouvertures (24) étant placée en amont de la zone de distribution de graines.

14. Dispositif de dosage monograine selon l'une quelconque des revendications 1 à 13, dans lequel ladite arête extérieure de guidage (31) du disque de guidage (28) est réalisée en segment d'anneau sur l'allure de la zone de réception, d'individualisation et de transport et mène tangentiellement vers le bas en une allure rectiligne définissant la zone de distribution (26).

15. Dispositif de dosage monograine selon la revendication 14, dans lequel une rainure de guidage (30) présente ladite arête intérieure de guidage (29) de plus petit diamètre et ladite arête extérieure de guidage (31) de plus grand diamètre.
